# EUROPÄISCHE PATENTSCHRIFT

(11) **EP 4 070 445 B1**
(45) Veröffentlichungstag und Bekanntmachung des Hinweises auf die Patenterteilung: **11.09.2024**
(21) Anmeldenummer: 20700368.2
(22) Anmeldetag: 09.01.2020
(51) Int. Cl.: H02M 7/5387, H02M 7/483, H02M 7/521, H02M 1/00, H02J 3/26

(54) **STROMRICHTERANORDNUNG SOWIE REGELUNGSVERFAHREN DAFÜR**
CONVERTER ARRANGEMENT AND CONTROL METHOD FOR SAME
ENSEMBLE CONVERTISSEUR DE COURANT ET DISPOSITIF DE RÉGULATION

(43) Veröffentlichungstag der Anmeldung: 12.10.2022
(73) Patentinhaber: Siemens Energy Global GmbH & Co. KG, 81739 München (DE)
(72) Erfinder: AL-AREQI, Sanad, 91052 Erlangen (DE); CHAUDHRY, Adnan, 91052 Erlangen (DE); HAMMER, Stefan, 91058 Erlangen (DE); HUSSENNETHER, Volker, 90482 Nürnberg (DE)
(86) Internationale Anmeldenummer: PCT/EP2020/050413
(87) Internationale Veröffentlichungsnummer: WO 2021/139888

(56) Entgegenhaltungen:
- BAKAS PANAGIOTIS ET AL: "Hybrid topologies for series and shunt compensation of the line-commutated converter", 2016 IEEE 8TH INTERNATIONAL POWER ELECTRONICS AND MOTION CONTROL CONFERENCE (IPEMC-ECCE ASIA), IEEE, 22 May 2016 (2016-05-22), pages 3030 - 3035, XP032924766, DOI: 10.1109/IPEMC.2016.7512779
- M. RANE ET AL: "Mitigation of harmonics and unbalanced source voltage condition in standalone microgrid: positive sequence component and dynamic phasor based compensator with real-time approach", HELIYON, vol. 5, no. 2, 28 February 2019 (2019-02-28), pages e01178 - 28, XP055733919, ISSN: 2405-8440, DOI: 10.1016/j.heliyon.2019.e01178
- PAULRAJ T ET AL: "Voltage Unbalance Mitigation Using Positive Sequence Series Compensator", IOSR JOURNAL OF ELECTRICAL AND ELECTRONICS ENGINEERING, 1 January 2014 (2014-01-01), pages 98 - 103, XP055733930, Retrieved from the Internet <URL:https://www.researchgate.net/publication/279911550_Voltage_Unbalance_Mitigation_Using_Positive_Sequence_Series_Compensator> [retrieved on 20200925], DOI: 10.9790/1676-093198103
- Z. WU ET AL: "NREL is a national laboratory of the U.S. Department of Energy Office of Energy Efficiency & Renewable Energy Operated by the Alliance for Sustainable Energy, LLC A Serially-Connected Compensator for Eliminating the Unbalanced Three-Phase Voltage Impact on Wind Turbine Generators", 2015 IEEE POWER AND ENERGY SOCIETY GENERAL MEETING, 30 July 2015 (2015-07-30), XP055733937, Retrieved from the Internet <URL:https://www.nrel.gov/docs/fy15osti/63875.pdf> [retrieved on 20200925]

## Beschreibung

Die Erfindung betrifft ein Regelungsverfahren für eine Stromrichteranordnung, die einen netzgeführten Stromrichter mit einem Wechselspannungsanschluss umfasst, der über eine Phasenleitung mit einem Wechselspannungsnetz verbindbar bzw. im Betrieb der Stromrichteranordnung verbunden ist, wobei die Stromrichteranordnung ferner wenigstens einen Schaltmodulzweig umfasst, der seriell in der Phasenleitung angeordnet ist, und der eine Reihenschaltung von Schaltmodulen umfasst, an deren Anschlüssen jeweils bipolare Spannungen erzeugbar sind, die sich zu einer Zweigspannung summieren. Netzgeführte Stromrichter sind aus dem Stand der Technik bekannt. Sie zeichnen sich insbesondere dadurch aus, dass ein Umschalten der Stromrichterventile (auch als Kommutierung bezeichnet) durch das angeschlossene Wechselspannungsnetz bewirkt wird. Die in dem netzgeführten Stromrichter verwendeten Halbleiterschalter sind oft entweder passive Elemente, wie Dioden, oder ein- aber nicht aktiv abschaltbare Halbleiterschalter, wie beispielsweise Thyristoren. Der Vorteil netzgeführter Stromrichter liegt vor allem in deren Robustheit, Zuverlässigkeit, relativer Einfachheit in der Handhabung und Steuerung sowie der Möglichkeit, netzgeführte Stromrichter für besonders hohe Spannungen auszulegen.

Netzgeführte Stromrichter werden in manchen Anwendungen im Zusammenhang mit einem schwachen bzw. instabilen Netz eingesetzt. In solchen Anwendungen kann der Fall eintreten, dass aufgrund transienter Vorgänge eine durch das Wechselspannungsnetz bereitgestellte Wechselspannung (bzw. Spannungszeitfläche) geringer ist als diejenige, die zur Kommutierung des Stromrichters benötigt wird. Solche transienten Vorgänge können beispielsweise das Schalten eines Wechselspannungsfilters, das Schalten eines Transformatorstufenstellers oder eine Änderung der dem Wechselspannungsnetz entnommenen elektrischen Leistung (sogenannter Spannungseinbruch) sein. Dies kann zu Kommutierungsfehlern und zu anderen Störungen beim Betrieb oder gar zu einer Betriebsunterbrechung kommen.

Um die Spannungsstabilität bei schwachen Netzen zu verbessern, ist es möglich, den netzgeführten Stromrichter mit einer Shunt-Kompensation zu kombinieren. Bei sehr schwachen AC Netzen kommt zusätzlich der Einsatz eines rotierenden Phasenschiebers infrage.

Aus dem Beitrag von Bakas et al. "Hybrid Topologies for Series and Shunt Compensation of the Line-Commutated Converter", IEEE 2016, ist eine Anordnung mit einem netzgeführten Stromrichter und einer regelbaren Serien-Kapazität sowie einem zugehörigen Regelungskonzept bekannt. Die Serien-Kapazität wird dabei durch seriell in eine Phasenleitung eingebundene Vollbrücken-Schaltmodule realisiert. Bei der bekannten Anordnung ist insbesondere eine "passive" Nutzung der Vollbrücken-Schaltmodule vorgesehen, bei welchem diese nur zum Einbringen einer grundfrequenten Spannung dienen. Vollbrücken-Schaltmodule zeichnen sich, insbesondere dadurch aus, dass an deren Anschlüssen eine bipolare Spannung erzeugbar ist, d.h. sowohl eine positive als auch eine negative Schaltmodulspannung. Der Betrag der Schaltmodulspannung entspricht im Wesentlichen einer an einem Energiespeicher des Vollbrücken-Schaltmoduls anstehenden Energiespeicherspannung. Mittels der regelbaren Serien-Kapazität kann vorteilhaft eine Netzimpedanz zwischen dem Stromrichter und dem Anbindungspunkt kompensiert werden.

Die Aufgabe der Erfindung ist es, ein artgemäßes Verfahren vorzuschlagen, dass möglichst effektiv und zuverlässig ist.

Die Erfindung löst diese Aufgabe durch ein Verfahren gemäß Anspruch 1 und eine Vorrichtung gemäß Anspruch 6. Die Aufgabe wird bei dem artgemäßen Verfahren erfindungsgemä-ße dadurch gelöst, dass eine Anbindungsspannung an einem Anbindungspunkt zwischen dem Schaltmodulzweig und dem Stromrichter (der auch als PCC, point of common coupling bezeichnet werden kann) durch Anpassen (lediglich) einer Amplitude eines Mitsystems der Zweigspannung geregelt wird. Dies bedeutet insbesondere, dass bei der Regelung das Mitsystem der Zweigspannung mittels einer entsprechenden Regelungseinrichtung ermittelt und anschließend entsprechend weiterverarbeitet wird. Die Zerlegung der Zweigspannung in das Mitsystem sowie ein Gegensystem und ein Nullsystem ist eine dem Fachmann bekannte Regelungsmaßnahme. Durch Regelung der Ausgangsspannung auf der Grundlage lediglich des Mitsystems bzw. dessen Amplitude ist es möglich, die Spannungsregelung von der Energieregelung der Stromrichteranordnung und insbesondere des Schaltmodulzweiges zu entkoppeln. Dies erlaubt nach eigenen Untersuchungen in der Folge den Einsatz besonders zuverlässiger übriger Regelungsmaßnahmen gemäß einer effektiven und üblichen Regelungstheorie.

Entsprechend kann eine Zweigenergie des Schaltmodulzweiges durch Anpassen (lediglich) einer Phase des Mitsystems der Zweigspannung geregelt werden. Die Regelung der Zweigenergie bedeutet insbesondere, dass Anpassung derart erfolgt, dass die Zweigenergie einem vorgegebenen Sollwert möglichst entspricht. Die Zweigenergie ist dabei diejenige Energie, die zu einem gegebenen Zeitpunkt in dem Schaltmodulzweig gespeichert ist. Sie entspricht im Wesentlichen der in den Schaltmodulen des Schaltmodulzweiges gespeicherten Energie. Werden mehrere Schaltmodulzweige eingesetzt, die zusammengefasst als Konverter bezeichnet werden, so ersetzt die Zweigenergie die Konverter-Gesamtenergie.

Zweckmäßigerweise erfolgt eine Balancierung von Energiespeicherspannungen der Schaltmodule durch Anpassen einer Amplitude und einer Phase eines Gegensystems der Zweigspannung. Dazu verfügen die Schaltmodule geeigneterweise jeweils über einen Energiespeicher, so dass eine an den Anschlüssen des Schaltmoduls erzeugbare Spannung dem Betrag nach im Wesentlichen der Energiespeicherspannung entspricht. Eine Balancierung der Energiespeicherspannungen hat die Aufgabe, die Energiespeicherspannungen aller verwendeten Schaltmodule auf zueinander gleichem Niveau zu halten. Unterschiedliche Energiespeicherspannungen bzw. Differenzen zwischen den Energiespeicherspannungen der Schaltmodule des Schaltmodulzweiges führen mit der Zeit zu einer unterschiedlich hohen Beanspruchung der Schaltmodule, was eine Verringerung der Betriebsfähigkeit der gesamten Anordnung bewirken kann.

Gemäß der Erfindung weist die Stromrichteranordnung für jede Phase des Wechselspannungsnetzes jeweils einen Schaltmodulzweig auf, wobei die Anpassungen für alle Schaltmodulzweige durchgeführt werden. Insbesondere bei einem dreiphasigen Wechselspannungsnetz ist der netzgeführte Stromrichter geeigneterweise dreiphasig ausgebildet. Ein zweiter Schaltmodulzweig ist seriell zwischen einem zweiten Wechselspannungsanschluss des Stromrichters und einem Anbindungspunkt an eine zweite Phasenleitung des Wechselspannungsnetzes angeordnet. Ein dritter Schaltmodulzweig ist seriell zwischen einem dritten Wechselspannungsanschluss des Stromrichters und einem Anbindungspunkt an eine dritte Phasenleitung des Wechselspannungsnetzes angeordnet. Die Schaltmodulzweige können, müssen aber nicht notwendigerweise, gleichartig aufgebaut sein. Jeder Schaltmodulzweig umfasst zweckmäßigerweise eine eigene Reihenschaltung der Schaltmodule. Bei dieser Art von Regelung hat die Energieregelung insbesondere das Ziel, die Energie für alle Schaltmodulzweige gleich zu halten, damit keine unterschiedliche Beanspruchung der Schaltmodulzweige entsteht. Die Balancierung wird für jeden Schaltmodulzweig einzeln durchgeführt, damit die dem jeweiligen Schaltmodulzweig zugeordneten Schaltmodule (jedenfalls im zeitlichen Mittel) möglichst gleiche Energiespeicherspannungen aufweisen.

Erfindungsgemäß wird ein Spannungssollwert für die Zweigspannung erzeugt, der sich aus einem Mitsystem-Sollwert und einem Gegensystem-Sollwert zusammensetzt, wobei der Mitsystem-Sollwert unter Berücksichtigung eines Gesamtenergiesollwertes und eines Anbindungsspannungssollwertes erzeugt wird, und der Gegensystem-Sollwert unter Berücksichtigung von Schaltmodulzweig-Energien erzeugt wird. Unter Umständen kann es dabei sinnvoll sein, die verarbeiteten Größen in ein geeignetes Bezugssystem zu überführen. Dies kann zum Beispiel mittels einer Clark-Transformation geschehen.

Geeigneterweise wird der Spannungssollwert der Ausgangsspannung derart gewählt, dass eine Netzimpedanz des Wechselspannungsnetzes kompensiert wird. Auf diese Weise kann beispielweise eine zwischen dem Stromrichter und dem PCC vorliegende Netzimpedanz kompensiert werden. Insbesondere kann hierbei mittels des Schaltmodulzweiges eine Zusatzspannung in das Netz injiziert werden, d.h. so dass eine stromrichterseitige Spannung am Schaltmodulzweig kleiner als eine netzseitige Spannung am Schaltmodulzweig ist. Die injizierte Spannung kann beispielsweise eine Wechselspannung sein mit einer Frequenz, die der Nennfrequenz des Wechselspannungsnetzes entspricht.

Es wird als vorteilhaft angesehen, wenn ein wechselspannungsseitiger Strom als Bezugsgröße zu einer Bestimmung des Mitsystems verwendet wird. Der wechselspannungsseitige Strom bildet somit die Bezugsgröße, auf die sich das Mitsystem und das Gegensystem der Spannung beziehen. Der wechselspannungsseitige Strom ist derjenige Strom, der durch den oder die Schaltmodulzweige fließt.

Die Erfindung betrifft ferner eine Stromrichteranordnung, die einen netzgeführten Stromrichter umfasst, der einen Wechselspannungsanschluss aufweist, der über eine Phasenleitung mit einem Wechselspannungsnetz verbindbar ist, wobei die Stromrichteranordnung ferner einen Schaltmodulzweig umfasst, der seriell in der Phasenleitung angeordnet ist, und der eine Reihenschaltung von Schaltmodulen umfasst, an deren Anschlüssen jeweils bipolare Spannungen erzeugbar sind, die sich zu einer Zweigspannung summieren, wobei die Stromrichteranordnung ferner eine Regelungseinrichtung zum Regeln einer Anbindungsspannung umfasst.

Eine solche Stromrichteranordnung ist aus dem bereits zuvor erwähnten Beitrag von Bakas et al. Bekannt.

Die Aufgabe der Erfindung ist, eine solche Stromrichteranordnung anzugeben, die möglichst effektiv und zuverlässig betrieben werden kann.

Die Aufgabe wird bei einer artgemäßen Stromrichteranordnung erfindungsgemäß dadurch gelöst, dass die Stromrichteranordnung dazu eingerichtet ist, mittels der Regelungseinrichtung das erfindungsgemäße Verfahren durchzuführen.

Die Vorteile der erfindungsgemäßen Stromrichteranordnung ergeben sich insbesondere aus den zuvor beschriebenen Vorteilen des erfindungsgemäßen Verfahrens.

Gemäß einer Ausführungsform der Erfindung ist der netzgeführte Stromrichter ein thyristorbasierter Stromrichter, der eine dreiphasige Brückenschaltung mit sechs Phasenzweigen aufweist. Jeder Phasenzweig erstreckt sich somit zwischen einem der Gleichspannungspole des Stromrichters und einem der Wechselspannungsanschlüsse. In jedem Phasenzweig ist eine Reihenschaltung von Thyristoren angeordnet. Die Anzahl der Thyristoren in einem Phasenzweig ist durch die gewünschte Auslegung des Stromrichters bestimmt.

Insbesondere kann die Stromrichteranordnung auf eine Spannung von mehr als 100 kV, bevorzugt mehr als 500 kV ausgelegt sein.

Die Erfindung wird nachfolgend anhand von Figuren 1 bis 5 weiter erläutert.
Figur 1 zeigt ein Ausführungsbeispiels einer erfindungsgemä-ßen Stromrichteranordnung in einer schematischen Darstellung;
Figur 2 zeigt ein Ausführungsbeispiel eines Schaltmodulzweiges für eine erfindungsgemäße Stromrichteranordnung in einer schematischen Darstellung;
Figur 3 zeigt ein Vollbrücken-Schaltmodul in einer schematischen Darstellung;
Figur 4 zeigt ein Zeigerdiagramm für Zweigstrom und Zweigspannung eines Schaltmodulzweiges in einer schematischen Darstellung;
Figur 5 zeigt ein Ablaufdiagramm eines Ausführungsbeispiels eines erfindungsgemäßen Verfahrens in einer schematischen Darstellung.

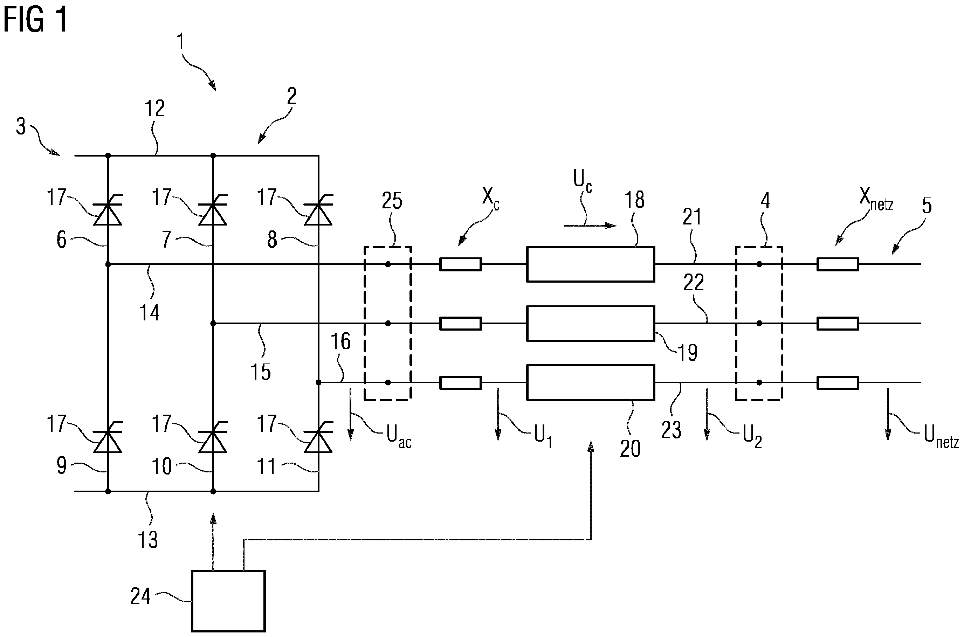

In Figur 1 ist eine Stromrichteranordnung 1 dargestellt, die an einem Netzanschlusspunkt 4 an ein dreiphasiges Wechselspannungsnetz 5 angeschlossen ist. Die Stromrichteranordnung 1 umfasst einen netzgeführten Stromrichter 2. Der Stromrichter 2 ist zwischen einem Gleichspannungsnetz bzw. Gleichspannungsleitung 3 und einem Anbindungspunkt 25 angeordnet. Der Stromrichter 2 umfasst sechs Stromrichterarme bzw. Stromrichterventile 6-11, die sich jeweils zwischen einem der Gleichspannungspole 12 oder 13 des Stromrichters 2 und einem der drei Wechselspannungsanschlüsse 14-16 erstrecken. In jedem der Stromrichterarme 6-11 ist eine Reihenschaltung von Thyristoren 17 angeordnet. Der Stromrichter 2 ist mittels der Wechselspannungsanschlüsse 14-16 über drei Phasenleitungen 21-23 mit dem Wechselspannungsnetz 5 verbunden.

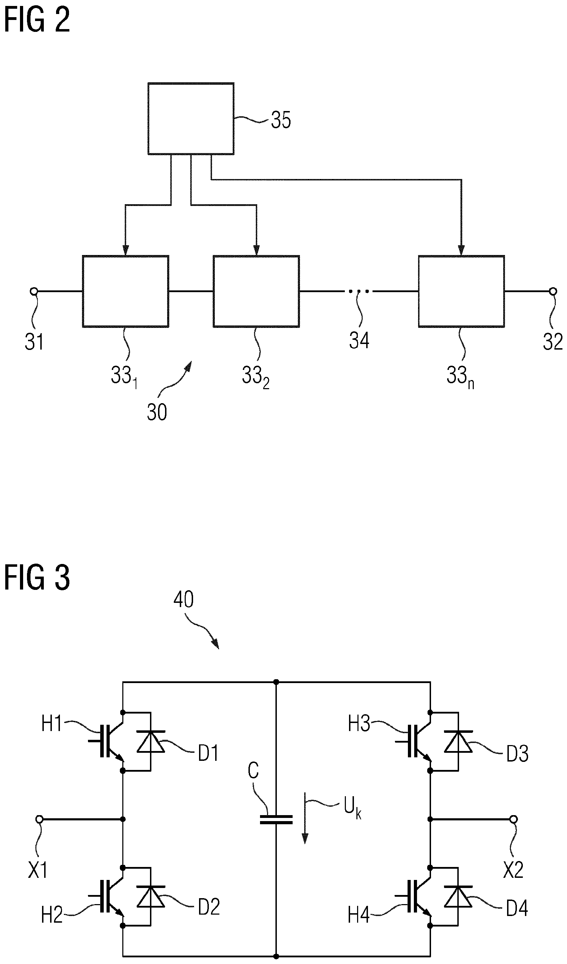

Die Stromrichteranordnung 1 umfasst ferner einen ersten Schaltmodulzweig 18, einen zweiten Schaltmodulzweig 19 sowie einen dritten Schaltmodulzweig 20. Der erste Schaltmodulzweig 18 ist in eine erste Phasenleitung 21, der zweite Schaltmodulzweig 19 in eine zweite Phasenleitung 22 und der dritte Schaltmodulzweig 20 in eine dritte Phasenleitung 23 seriell eingefügt. In dem in Figur 1 dargestellten Beispiel sind die drei Schaltmodulzweige 18-20 gleichartig aufgebaut, was jedoch im Allgemeinen nicht der Fall sein muss. Auf den Aufbau der Schaltmodulzweige 18-20 wird in der nachfolgenden Figur 2 näher eingegangen.

Eine an den Schaltzweigen 18-20 abfallende Spannung wird als Uc bezeichnet. Die stromrichterseitige Leitung-Erde-Spannung wird als U1, die netzseitige Leitung-Erde-Spannung entsprechend als U2 bezeichnet. Die Schaltmodulzweige 18-20 werden dazu eingesetzt, eine Netzimpedanz Xnetz und/oder eine konverterseitige Impedanz Xc zu kompensieren und eine Anbindungsspannung Uac am Anbindungspunkt 25 zu stabilisieren, um einen stabilen und zuverlässigen Betrieb der Stromrichteranordnung 1 und insbesondere des Stromrichter 2 zu gewährleisten. Die Stromrichteranordnung 1 verfügt hierzu über eine zentrale Regelungseinrichtung 24, die dazu eingerichtet ist, sowohl den Stromrichter 2 zu regeln bzw. die Ansteuerung der Halbleiterschalter zu veranlassen als auch die Schaltmodulzweige zu regeln bzw. die Ansteuerung der dort eingesetzten Halbleiterschalter zu veranlassen.

In Figur 2 ist ein Schaltmodulzweig 30 dargestellt, der zum Einsatz als einer der Schaltmodulzweige 18-20 der Stromrichteranordnung 1 der Figur 1 geeignet ist. Der Schaltmodulzweig 30 weist einen ersten Anschluss 31 und einen zweiten Anschluss 32 zum Schalten in eine Phasenleitung eines Wechselspannungsnetzes. Zwischen den beiden Anschlüssen 31, 32 ist eine Reihenschaltung von Schaltmodulen 331-33n angeordnet, deren Anzahl grundsätzlich beliebig und an die jeweilige Anwendung angepasst sein kann, was in Figur 2 mittels einer gepunkteten Linie 34 angedeutet ist. Auf den Aufbau der Schaltmodule 331-33n wird in der nachfolgenden Figur 3 näher eingegangen. Es ist hierbei selbstverständlich, dass nicht alle Schaltmodule 331-33n gleichartig aufgebaut sein müssen.

Eine Ansteuereinheit 35 ist dazu vorgesehen, die Ansteuerung der Schaltmodule 331-33n durchzuführen bzw. zu veranlassen. Die Ansteuereinheit 35 ist mit Kommunikationsmittel versehen, die beispielsweise eine Kommunikation mit einer übergeordneten zentralen Steuerungs- bzw. Regelungseinheit einer Stromrichteranordnung ermöglichen.

In Figur 3 ist ein Beispiel eines Schaltmoduls 40 für den Schaltzweig 30 der Figur 2 dargestellt, wobei das Schaltmodul 40 ein Vollbrücken-Schaltmodul ist. Das Schaltmodul 40 umfasst einen ersten abschaltbaren Halbleiterschalter H1, dem eine erste Freilaufdiode D1 antiparallel geschaltet ist, einen zweiten abschaltbaren Halbleiterschalter H2, dem eine zweite Freilaufdiode D2 antiparallel geschaltet ist, wobei der erste und der zweite Halbleiterschalter H1, H2 in einer ersten Halbleiterreihenschaltung miteinander verbunden sind und gleiche Durchlassrichtung aufweisen. Das Schaltmodul 40 umfasst ferner einen dritten abschaltbaren Halbleiterschalter H3, dem eine dritte Freilaufdiode D3 antiparallel geschaltet ist, und einen vierten abschaltbaren Halbleiterschalter H4, dem eine vierte Freilaufdiode D4 antiparallel geschaltet ist, wobei der dritte und der vierte Halbleiterschalter H3, H4 in einer zweiten Halbleiterreihenschaltung miteinander verbunden sind und gleiche Durchlassrichtung aufweisen. Die beiden Halbleiterreihenschaltungen sind parallel zueinander und zu einem Energiespeicher C angeordnet, an dem eine Energiespeicherspannung Uk ansteht. Des Weiteren umfasst ersten Schaltmodul ferner eine erste Anschlussklemme X1, die zwischen den Halbleiterschaltern H1, H2 der ersten Halbleiterreihenschaltung angeordnet ist, und eine zweite Anschlussklemme X2, die zwischen den 5Halbleiterschaltern H3, H4 der zweiten Halbleiterreihenschaltung angeordnet ist. Die Halbleiterschalter H1-4 sind mittels einer geeigneten Ansteuereinheit unabhängig voneinander ansteuerbar, d.h. ein- und/oder abschaltbar. Mittels geeigneter Ansteuerung der Halbleiterschalter H1-4 kann an den Anschlüssen X1,2 eine Spannung erzeugt werden (Schaltmodulspannung), die der am Energiespeicher C anstehenden Spannung Uk, einer Spannung -Uk oder einer Nullspannung entspricht.

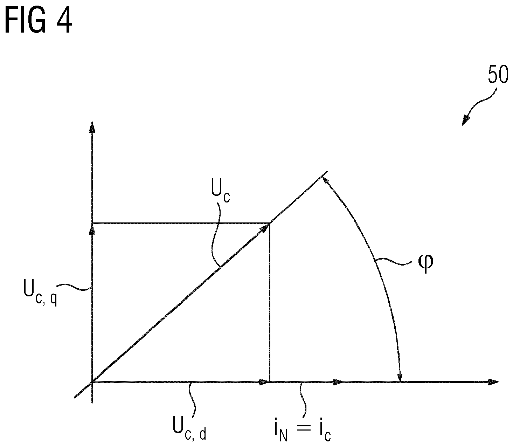

In Figur 4 ist ein Zeigerdiagramm 50 dargestellt. Das Zeigerdiagramm 50 verdeutlicht, dass für die Regelung der Zweigspannung Uc das Bezugssystem des Zweigstromes ic gewählt wird. Dabei entspricht der Zweigstrom ic durch den bzw. die Schaltmodulzweige dem Netzstrom iN. Der Vektor der Zweigspannung Uc weist einen Phasenwinkel phi gegenüber dem Zweigstrom ic und kann somit in eine d-Komponente Uc,d parallel zum Zweigstrom ic und eine q-Komponente Uc,q senkrecht zum Zweigstrom ic zerlegt werden. Diese beiden Komponenten werden bei der Spannungs- bzw. Energieregelung verwendet.

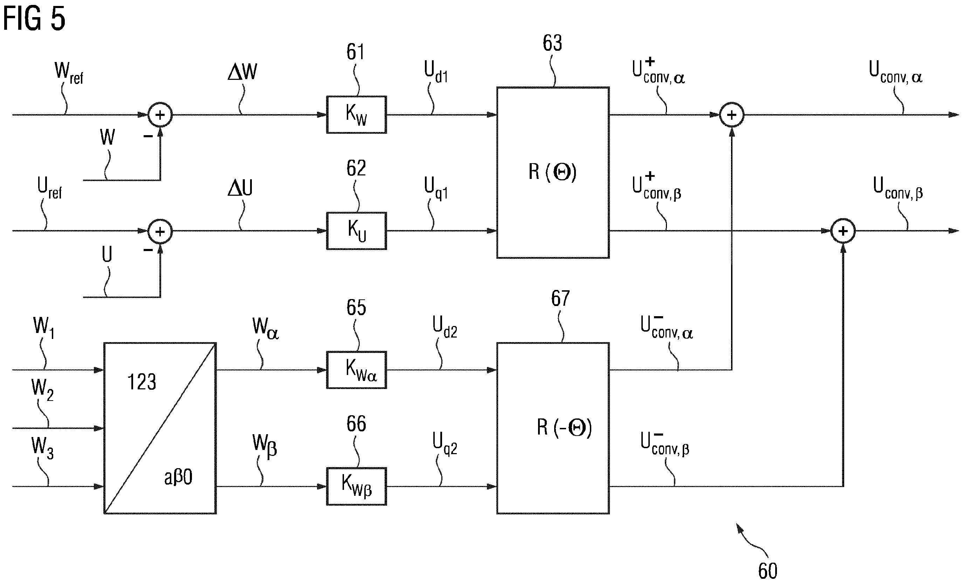

Ein schematisches Ablaufdiagramm 60 eines Beispiels des Regelungsablaufes ist in Figur 5 dargestellt. Die Regelung geht dabei von dem Fall einer dreiphasigen Ausführung der Stromrichteranordnung, wobei in einer ersten Phasenleitung ein erster Schaltmodulzweig, in einer zweiten Phasenleitung ein zweiter Schaltmodulzweig und in einer dritten Phasenleitung ein dritter Schaltmodulzweig angeordnet sind, ähnlich der in Figur 1 gezeigten Anordnung. Im Folgenden werden die drei Schaltmodulzweige gemeinsam als Konverter bezeichnet.

Gemäß dem in Figur 5 gezeigten Beispiel wird ein Sollwert Wref für die Konverter-Gesamtenergie mit einem gemessenen Wert W der Konverter-Gesamtenergie unter Bildung einer Energiedifferenz DeltaW verglichen. Die Energiedifferenz DeltaW wird einem ersten Regler 61 zugeführt. An dem Ausgang des ersten Reglers 61 wird eine erste d-Komponente Ud1 der Spannung im Bezugssystem des Zweistromes ic bereitgestellt. Zugleich wird ein Sollwert Uref der Anbindungsspannung an einem Anbindungspunkt zwischen dem Stromrichter und den Schaltmodulzweigen mit einem gemessenen Wert U der Anbindungsspannung unter Bildung einer Spannungsdifferenz DeltaU verglichen. Die Energiedifferenz DeltaU wird einem zweiten Regler 62 zugeführt. An dem Ausgang des zweiten Reglers 62 wird eine erste q-Komponente Uq1 der Spannung im Bezugssystem des Zweistromes ic bereitgestellt. Die d-Komponente Ud1 und die q-Komponente Uq1 werden mittels einer Drehtransformation in einem Drehtransformationsblock 63 mit einer Drehmatrix R(Theta)=(cos(Theta),-sin(Theta)/sin(Theta), cos(Theta)) transformiert, wobei Theta einen Normierungswinkel des Strom-Bezugssystems bezeichnet, und damit in eine erste Mitsystemkomponente Uconv,alpha+ der alpha-Komponente Uconv,alpha der der am Konverter einzustellenden Spannung und eine zweite Mitsystemkomponente Uconv,beta+ der beta-Komponente U-conv,beta der am Konverter einzustellenden Spannung umgewandelt.

Ein erster, zweiter und dritter Zweigenergiewert W1,W2,W3 werden einem Transformationsblock 64 zugeführt und mittels einer Clark-Transformation in entsprechende alpha- und beta-Komponenten Walpha und Wbeta umgewandelt. Diese werden einem dritten bzw. vierten Regler 65 bzw. 66 zugeführt, an dessen Ausgang eine zweite d-Komponente Ud2 sowie eine zweite q-Komponente Uq2 der Spannung im Bezugssystem des Zweistromes ic bereitgestellt werden. Die zweite d-Komponente Ud2 und die zweite q-Komponente Uq2 werden mittels einer Drehtransformation in einem zweiten Drehtransformationsblock 67 mit einer Drehmatrix R(Theta)=(cos(Theta),sin(Theta)/-sin(Theta), cos(Theta)) transformiert und damit in eine erste Gegensystemkomponente Uconv,alpha- der alpha-Komponente Uconv,alpha der am Konverter einzustellenden Spannung und eine zweite Gegensystemkomponente Uconv,beta- der beta-Komponente U-conv,beta der am Konverter einzustellenden Spannung umgewandelt.

Die am Konverter einzustellende Spannung setzt sich somit aus Uconv,alpha = Uconv,alpha+ + Uconv,alpha- und Uconv,beta = Uconv,beta+ + Uconv,beta- zusammen.

## Patentansprüche

1. Regelungsverfahren für eine Stromrichteranordnung (1), die einen netzgeführten Stromrichter (2) umfasst, der einen Wechselspannungsanschluss (14 - 16) aufweist, der über eine Phasenleitung (21 - 23) mit einem Wechselspannungsnetz (5) verbindbar ist, wobei die Stromrichteranordnung (1) ferner einen Schaltmodulzweig (18 - 20) umfasst, der seriell in der Phasenleitung (21 - 23) angeordnet ist, und der eine Reihenschaltung von Schaltmodulen (40) umfasst, an deren Anschlüssen (X1, X2) jeweils bipolare Spannungen erzeugbar sind, die sich zu einer Zweigspannung (Ue) summieren,
**dadurch gekennzeichnet, dass** zum Entkoppeln einer Spannungsregelung von einer Energieregelung der Stromrichteranordnung eine Anbindungsspannung (Uac) an einem Anbindungspunkt (25) zwischen dem Schaltmodulzweig (18 - 20) und dem Stromrichter durch Anpassen einer Amplitude eines Mitsystems der Zweigspannung (Ue) geregelt wird, wobei die Stromrichteranordnung (1) für jede Phase des Wechselspannungsnetzes jeweils einen Schaltmodulzweig (18 - 20) aufweist, wobei die Anpassungen für alle Schaltmodulzweige (18 - 20) durchgeführt werden, wobei ein Spannungssollwert für die Zweigspannung erzeugt wird, der sich aus einem Mitsystem-Sollwert und einem Gegensystem-Sollwert zusammensetzt, wobei der Mitsystem-Sollwert unter Berücksichtigung eines Gesamtenergiesollwertes und eines Anbindungsspannungssollwertes erzeugt wird, und der Gegensystem-Sollwert unter Berücksichtigung von Schaltmodulzweig-Energien erzeugt wird.

2. Verfahren nach Anspruch 1,
wobei eine Zweigenergie des Schaltmodulzweiges (18 - 20) durch Anpassen einer Phase des Mitsystems der Zweigspannung (Ue) geregelt wird.

3. Verfahren nach Anspruch 2,
wobei eine Balancierung von Energiespeicherspannungen der Schaltmodule (40) durch Anpassen einer Amplitude und einer Phase eines Gegensystems der Zweigspannung (Ue) durchgeführt wird.

4. Verfahren nach einem der vorangehenden Ansprüche,
wobei mittels des Verfahrens eine Netzimpedanz (XNetz)des Wechselspannungsnetzes (5) kompensiert wird.

5. Verfahren nach einem der vorangehenden Ansprüche,
wobei ein wechselspannungsseitiger Strom als Bezugsgröße zu einer Bestimmung des Mitsystems verwendet wird.

6. Stromrichteranordnung (1), die einen netzgeführten Stromrichter (2) umfasst, der einen Wechselspannungsanschluss (14 - 16) aufweist, der über eine Phasenleitung (21 - 23) mit einem Wechselspannungsnetz (5) verbindbar ist, wobei die Stromrichteranordnung (1) ferner einen Schaltmodulzweig (18 - 20) umfasst, der seriell in der Phasenleitung (21 - 23) angeordnet ist, und der eine Reihenschaltung von Schaltmodulen (40) umfasst, an deren Anschlüssen (X1, X2) jeweils bipolare Spannungen erzeugbar sind, die sich zu einer Zweigspannung (Ue) summieren,
wobei die Stromrichteranordnung (1) ferner eine Regelungseinrichtung (24) zum Regeln einer Anbindungsspannung umfasst, **dadurch gekennzeichnet, dass**
die Stromrichteranordnung dazu eingerichtet ist, mittels der Regelungseinrichtung (24) ein Verfahren nach einem der Ansprüche 1 bis 5 durchzuführen.

7. Stromrichteranordnung (1) nach Anspruch 6,
wobei der netzgeführte Stromrichter (2) ein thyristorbasierter Stromrichter ist, der eine dreiphasige Brückenschaltung mit sechs Phasenzweigen aufweist.

8. Stromrichteranordnung (1) nach einem der Ansprüche 6 oder 7,
wobei die Stromrichteranordnung (1) auf eine Spannung von mehr als 100 kV ausgelegt ist.

## Claims

1. Control method for a power converter arrangement (1), which comprises a line-commutated power converter (2) which has an AC voltage terminal (14 - 16) which is able to be connected to an AC voltage grid (5) via a phase line (21 - 23), wherein the power converter arrangement (1) further comprises a switching module branch (18 - 20), which is arranged in series in the phase line (21 - 23) and which comprises a series connection of switching modules (40), at each of whose terminals (X1, X2) bipolar voltages which add up to produce a branch voltage (Ue) are able to be generated,
**characterized in that**, in order to decouple voltage control from energy control of the power converter arrangement, a link voltage (Uac) at a linking point (25) between the switching module branch (18 - 20) and the power converter is controlled by adjusting an amplitude of a positive-sequence system of the branch voltage (Ue), wherein the power converter arrangement (1) has a respective switching module branch (18 - 20) for each phase of the AC voltage grid, wherein the adjustments are carried out for all switching module branches (18 - 20), wherein a voltage setpoint value for the branch voltage is generated, which value consists of a positive-sequence system setpoint value and a negative-sequence system setpoint value, wherein the positive-sequence system setpoint value is generated in consideration of a total energy setpoint value and a link voltage setpoint value, and the negative-sequence system setpoint value is generated in consideration of switching module branch energies.

2. Method according to Claim 1,
wherein a branch energy of the switching module branch (18 - 20) is controlled by adjusting a phase of the positive-sequence system of the branch voltage (Ue).

3. Method according to Claim 2,
wherein balancing of energy storage unit voltages of the switching modules (40) is carried out by adjusting an amplitude and a phase of a negative-sequence system of the branch voltage (Ue) .

4. Method according to one of the preceding claims,
wherein the method is used to compensate for a line impedance (XNetz) of the AC voltage grid (5).

5. Method according to one of the preceding claims,
wherein an AC-voltage-side current is used as a reference variable for determining the positive-sequence system.

6. Power converter arrangement (1), which comprises a line-commutated power converter (2) which has an AC voltage terminal (14 - 16) which is able to be connected to an AC voltage grid (5) via a phase line (21 - 23), wherein the power converter arrangement (1) further comprises a switching module branch (18 - 20), which is arranged in series in the phase line (21 - 23) and which comprises a series connection of switching modules (40), at each of whose terminals (X1, X2) bipolar voltages which add up to produce a branch voltage (Ue) are able to be generated, wherein the power converter arrangement (1) further comprises a control device (24) for controlling a link voltage, **characterized in that**
the power converter arrangement is configured to carry out a method according to one of Claims 1 to 5 by means of the control device (24).

7. Power converter arrangement (1) according to Claim 6, wherein the line-commutated power converter (2) is a thyristor-based power converter which has a three-phase bridge circuit with six phase branches.

8. Power converter arrangement (1) according to either of Claims 6 and 7,
wherein the power converter arrangement (1) is designed for a voltage of more than 100 kV.

## Revendications

1. Procédé de régulation d'un montage (1) de convertisseur, qui comprend un convertisseur (2), qui est commuté par le réseau et qui a une borne (14 - 16) de tension alternative, qui peut être connectée à un réseau (5) de tension alternative par une ligne (21 - 23) de phase, dans lequel le montage (1) de convertisseur comprend en outre une branche (18 - 20) de module de coupure, qui est montée en série dans la ligne (21 - 23) de phase et qui comprend un circuit série de modules (40) de coupure aux bornes (X1, X2) desquels respectivement des tensions bipolaires peuvent être produites, qui s'additionnent en une tension (Ue) de branche, **caractérisé en ce que**, pour le découplage d'une régulation de la tension d'une régulation d'énergie du montage de convertisseur, on régule une tension (Uac) d'attache en un point (25) d'attache entre la branche (18 - 20) de module de coupure et le convertisseur, en adaptant une amplitude d'un système direct de la tension (Ue) de branche, dans lequel le montage (1) de convertisseur a, pour chaque phase du réseau de tension alternative, respectivement une branche (18 - 20) de module de coupure, dans lequel on effectue les adaptations pour toutes les branches (18 - 20) de module de coupure, dans lequel on produit une valeur de consigne de la tension de branche, qui se compose d'une valeur de consigne de système direct et d'une valeur de consigne de contre-système, dans lequel on produit la valeur de consigne de système direct en tenant compte d'une valeur de consigne d'énergie d'ensemble et d'une valeur de consigne de tension d'attache, et on produit la valeur de consigne du contre-système en tenant compte d'énergies de branche de module de coupure.

2. Procédé suivant la revendication 1,
dans lequel on régule une énergie de la branche (18 - 20) de module de coupure en adaptant une phase du système direct de la tension (Ue) de branche.

3. Procédé suivant la revendication 2,
dans lequel on effectue un équilibrage des tensions d'accumulateur d'énergie des modules (40) de coupure en adaptant une amplitude et une phase d'un contre-système de la tension (Ue) de branche.

4. Procédé suivant l'une des revendications précédentes,
dans lequel on compense, au moyen du procédé, une impédance (XNetz) du réseau (5) de tension alternative.

5. Procédé suivant l'une des revendications précédentes,
dans lequel on utilise un courant du côté de la tension alternative comme grandeur de référence pour une détermination du système direct.

6. Montage (1) de convertisseur, qui comprend un convertisseur (2), qui est commuté par le réseau et qui a une borne (14 - 16) de tension alternative, qui peut être connectée à un réseau (5) de tension alternative par une ligne (21 - 23) de phase, dans lequel le montage (1) de convertisseur comprend en outre une branche (18 - 20) de module de coupure, qui est montée en série dans la ligne (21 - 23) de phase et qui comprend un circuit série de modules (40) de coupure aux bornes (X1, X2) desquels respectivement peuvent être produites des tensions bipolaires, qui s'additionnent en une tension (Ue) de branche,
dans lequel le montage (1) de convertisseur comprend en outre un dispositif (24) de régulation pour la régulation d'une tension d'attache,
**caractérisé en ce que**
le montage de convertisseur est agencé pour effectuer un procédé suivant l'une des revendications 1 à 5 au moyen du dispositif (24) de régulation.

7. Montage (1) de convertisseur suivant la revendication 6, dans lequel le convertisseur (2) commuté par le réseau est un convertisseur à base de thyristors, qui a un circuit en pont triphasé ayant six branches de phase.

8. Montage (1) de convertisseur suivant la revendication 6 ou 7,
dans lequel le montage (1) de convertisseur est conçu pour une tension de plus de 100 kW.
